(19) **Europäisches Patentamt / European Patent Office / Office européen des brevets**

(11) **EP 1 796 308 A2**

(12) **EUROPEAN PATENT APPLICATION**

(43) Date of publication:
**13.06.2007 Bulletin 2007/24**

(51) Int Cl.:
***H04L 9/00*** (2006.01)

(21) Application number: **07103509.1**

(22) Date of filing: **03.05.2002**

(84) Designated Contracting States:
**DE GB**

(30) Priority: **04.05.2001 US 288841 P**

(62) Document number(s) of the earlier application(s) in accordance with Art. 76 EPC:
**02731656.1 / 1 397 884**

(71) Applicant: **NTT DoCoMo Inc.**
**Chiyoda-Ku**
**Tokyo 100-6150 (JP)**

(72) Inventors:
• **Gentry, Craig B**
**Mountain View, CA 94041 (US)**

• **Yin, Yiqun**
**San Mateo, CA 94403 (US)**

(74) Representative: **Skone James, Robert Edmund**
**Gill Jennings & Every LLP**
**Broadgate House**
**7 Eldon Street**
**London EC2M 7LH (GB)**

Remarks:
This application was filed on 05 03 - 2007 as a divisional application to the application mentioned under INID code 62.

(54) **Ring-based signature scheme**

(57) A method and system for generating and verifying a digital signature of a message is provided. The digital signature includes digital signature polynomials. Two relatively prime ideals p and q of a ring R(102) are selected. A private key and the second ideal q are used to generate a public key. One or more message polynomials are generated based on the message to be signed. The digital signature polynomials are generated (110) using at least one of the message polynomials, at least one of the private key polynomials, and at least one of the ideals p and q, wherein the digital signature polynomials in unreduced form are not multiples of the private key polynomials in the ring R. The signature is then verified (116) by confirming that a deviation between at least one of the message polynomials and at least one of the digital signature polynomials is less than a predetermined deviation threshold.

FIG. 1

EP 1 796 308 A2

**Description**

RELATED APPLICATIONS

Applicants hereby claim priority under 35 U.S.C. § 119(e) to provisional U.S. patent application Ser. No. 60/288,841, filed on May 4, 2001, and incorporated herein by reference.

BACKGROUND OF THE INVENTION

The present invention relates in general to cryptography and secure communication via computer networks or via other types of systems and devices, and more particularly to the generation and verification of digital signatures using ring-based polynomial algebra.

Digital signatures serve various functions in secure communication, including authentication, data security, and non-repudiation. Typically, a digital signature is bound both to the content of a message to be sent, and to the identity of the signer. In public key cryptographic systems, the digital signature typically is generated using both a private key, which is known only to the signer, and the message to be signed. A public key, which may be known to anyone, is then used to verify the signature.

A digital signature should be verifiable so that the recipient of a signed message is confident that the signer possesses the private key. For instance, the recipient of a message should be able to use the signer's public key to verify that the signer's digital signature is authentic. In addition, forgery of a digital signature should be infeasible. Finally, to avoid compromising the signer's private key, a digital signature should not leak useful information about the private key.

Various methods and systems for generating and verifying digital signatures are known and have been used in computer networks and other communication systems, such as mobile telephone networks. There has been a particular emphasis on designing digital signature schemes that provide for fast and efficient generation and verification of signatures. For instance, a digital signature scheme called NTRU Signature Scheme ("NSS") was proposed in connection with the NTRU public key cryptosystem. NSS was described in J. Hoffstein, J. Pipher, J.H. Silverman, NSS: The NTRU Signature Scheme, PROC. OF EUROCRYPT '01, LNCS 2045, pages 211-228, Springer-Verlag, 2001, Based on polynomial algebra, NSS employs reasonably short, easily created keys, high speed, and low memory requirements.

NSS involves the generation of a signature using a private key and the message to be signed. The private key, the message, and the signature each are represented as one or more polynomials. During the process of generating a signature, the coefficients of the signature polynomials are reduced either modulo $p$ or modulo $q$, where $p$ and $q$ are fixed integers. Once a signature has been generated, it may be verified, in part, by determining the deviation between the signature polynomials and the message polynomials. The deviation between two polynomials $a$ and $b$, is defined as the number of coefficients of $a$ (mod $q$) and $b$ (mod $q$) that differ modulo $p$. NSS is designed to allow for certain deviation between the signature polynomials and the message polynomials in order to render generation of the signature more efficient and to decrease the likelihood that the signature will leak useful information about the private key. For instance, where each polynomial has 251 coefficients ($N$ = 251), NSS tolerates signature deviations of between 55 and 87 coefficients per polynomial. Accordingly, an authentic signature in NSS may deviate from the original message by more than $N$/3.

Because of its large tolerance for deviations, NSS contains serious security flaws. Numerous cryptanalyses have demonstrated that NSS signatures may be forged with relative ease through probabilistic manipulation of the signature coefficients. For instance, in one attack, forgeries having deviations of only 56 coefficients per polynomial (for $N$ = 251) were generated with no knowledge of the signer's private key. In addition, these analyses proved that, despite the high rates of deviation, NSS signatures nevertheless leak sufficient useful information to enable an attacker to obtain a signer's private key. The results of one such analysis was published in C. Gentry, J. Jonsson, J. Stern, M. Szydlo, Cryptanalysis of the NTRU Signature Scheme (NSS) from Eurocrypt 2001, PROC, OF ASIACRYPT '01, LNCS 2248, pages 1-20, Springer-Verlag, 2001. See also C. Gentry, M. Szydlo, Cryptanalysis of the Revised NTRU Signature Scheme, ADVANCES IN CRYPTOLOGY-EUROCRYPT '02, LECTURE NOTES IN COMPUTER SCIENCE, Springer-Verlag, 2002. The content of both articles is incorporated herein by reference, and is hereinafter referred to as the "Cryptanalysis of NSS papers."

Accordingly, there remains a need for a fast, efficient, and secure digital signature system. It is therefore an object of the present invention to provide a fast, efficient, and secure digital signature system in which it is infeasible for an attacker to generate forgeries of digital signatures. It also is an object of the present invention to enable generation of digital signatures that do not leak useful information about the signer's private key.

BRIEF SUMMARY OF THE PREFERRED EMBODIMENTS

In accordance with the present invention, a digital signature method and system are described that enable fast, efficient, and secure generation and verification of digital signatures, that render forgery of the signatures infeasible, and that provide for signatures that do not leak useful information about a signer's private key.

According to one aspect of the present invention, a method of generating and verifying a digital signature of a message is provided. The digital signature includes one or more digital signature polynomials, Two relatively prime ideals $p$ and $q$ of a ring R are selected. A private key is selected to include one or more private key polynomials of the ring R. A public key is generated using the private key and the second ideal $q$. One or more message polynomials are generated using the message. The digital signature then is generated using at least the following elements: (a) at least one of the message polynomials, (b) at least one of the private key polynomials, and (c) at least one of the ideals $p$ and $q$, wherein the digital signature polynomials in unreduced form are not multiples of the private key polynomials in the ring R. The digital signature then may be verified at least by confirming that the deviation between at least one of the message polynomials and at least one of the digital signature polynomials is less than a predetermined deviation threshold.

According to an alternative aspect of the present invention, or in combination with the verification process described above, the digital signature also may be verified at least by confirming that a norm of at least one of the digital signature polynomials is less than a predetermined norm threshold.

According to another aspect of the present invention, a method of generating and verifying a digital signature of a message is provided. The digital signature includes one or more digital signature polynomials. Two relatively prime ideals $p$ and $q$ of a ring R are selected. A private key is selected to include one or more private key polynomials of the ring R. A public key is generated using the private key and the second ideal $q$. Auxiliary multiple-use private information is selected. One or more message polynomials are generated using the message. The digital signature then is generated using at least the following elements: (a) at least one of the message polynomials, (b) at least one of the private key polynomials, (c) at least one of the ideals $p$ and $q$, and (d) the auxiliary multiple-use private information. The digital signature then may be verified at least by confirming that the digital signature polynomials and the public key satisfy a predetermined relationship.

According to another embodiment of the present invention, there is provided a method of generating and verifying a digital signature of a message $m$, wherein the digital signature includes two digital signature polynomials $u$ and $v$. Two relatively prime ideals $p$ and $q$ of a ring $R = \mathbb{Z}[X]/(X^N - 1)$ are selected, where $N$ is an integer greater than 1. A private key is selected to include two private key polynomials $f$ and $g$ of the ring R. A public key $h$ is computed as $h = f_q^{-1} * g \pmod{q}$. First and second intermediate private polynomial $s$ and $t$ are selected such that $s * h = t$ and such that $s$ and $t$ are substantially congruent modulo $p$. A third intermediate private polynomial $a$ is selected so as to minimize the number of deviations between one of the message polynomials $m$ and a quantity $t + a * g \pmod{q}$. The first digital signature polynomial $u$ then is computed as $u = s + a * f \pmod{q}$, and the second digital signature polynomial $v$ is computed as $v = t + a * g \pmod{q}$. Finally, the digital signature is verified by confirming that the deviation between $m$ and $u$ is less than a predetermined deviation threshold and that the deviation between $m$ and $v$ also is less than the predetermined deviation threshold.

According to another embodiment of the present invention, there is provided another method of generating and verifying a digital signature of a message $m$, wherein the digital signature includes two digital signature polynomials $u$ and $v$. Two ideals $p$ and $q$ of a ring $R = \mathbb{Z}[X]/(X^N - 1)$ are selected. A private key is selected to include two private key polynomials $f$ and $g$ of the ring R. A public key $h$ is computed as $h = f_q^{-1} * g \pmod{q}$. A random polynomial $r$ is selected, and a first intermediate polynomial $t$ is computed as $t = r * h \pmod{q}$. A second intermediate polynomial a is selected such that $a$ has a Euclidean norm on the order of $\sqrt{N}$ and so as to minimize the number of deviations between a message polynomial $m$ and a quantity $t + a * g \pmod{q}$. The first digital signature polynomial $u$ then is computed as $u = r + a * f \pmod{q}$, and the second digital signature polynomial $v$ is computed as $v = t + a * g \pmod{q}$. Finally, the digital signature is verified by confirming that a Euclidean norm associated with the first digital signature polynomial $u$ is on the order of $N$, and that the deviation between the message $m$ and the second digital signature polynomial $v$ is less than a predetermined deviation threshold.

According to another embodiment of the present invention, there is provided a method of generating and verifying a digital signature of a message $m$, wherein the digital signature includes four digital signature polynomials $u_1$, $v_1$, $u_2$, and $v_2$. Two ideals $p$ and $q$ of a ring $R = \mathbb{Z}[X]/(X^N - 1)$ are selected. A private key is selected to include two private key polynomials, $f$ and $g$ of the ring R. A public key $h$ is computed as $h = f_q^{-1} * g \pmod{q}$. A one-time private key $e$ is selected to include a one-time private key polynomial $e$ of the ring R. Two one-time public key polynomials $h_1$ and $h_2$ are generated, wherein $h_1 = f^1 * e \pmod{q}$ and $h_2 = g^1 * e \pmod{q}$. A first random polynomial $r_1$ is then selected. Next, a first intermediate polynomial $t_1$ is computed as $t_1 = r_1 * h_1 \pmod{q}$, and a second intermediate polynomial $a_1$ is selected such that the Euclidean norm of $a_1$ is on the order of $\sqrt{N}$ and so as to minimize the number of deviations between one of the message polynomials $m$ and the quantify $t_1 + a_1 * e \pmod{q}$. The first digital signature polynomial $u_1$ is then computed as $u_1 = r_1 + a_1 * f \pmod{q}$, and the second digital signature polynomial $v_1$ is computed as $v_1 = t_1 + a_1 * e \pmod{q}$. A second random polynomial $r_2$ also is selected, a third intermediate polynomial $t_2$ is computed as $t_2 = r_2 * h_2 \pmod{q}$, and a fourth intermediate polynomial $a_2$ is selected such that the Euclidean norm of $a_2$ is on the order of $\sqrt{N}$ and so as to minimize the number of deviations between one of the message polynomials $m$ and the quantify $t_2 + a_2 * e \pmod{q}$. The third digital signature polynomial $u_2$ is then computed as $u_2 = r_2 + a_2 * g \pmod{q}$, and the fourth digital signature polynomial $v_2$ is computed as $v_2 = t_2 + a_2 * e \pmod{q}$. Finally, the digital signature is verified at least by confirming that the Euclidean norm of each of the first and third digital signature polynomials $u_1$ and $u_2$ is on the order of $N$, and that the deviation between the message $m$ and each of the second and fourth digital signature polynomials $v_1$ and $v_2$ is less than a predetermined deviation threshold.

According to another embodiment of the present invention, there is provided an apparatus for generating and verifying a digital signature of a message, wherein the digital signature includes one or more digital signature polynomials. The apparatus includes a memory for storing ideals $p$ and $q$ of the ring R and a private key including one or more private key polynomials of the ring R. The apparatus also includes a processor operable to generate one or more message polynomials based on the message, to generate the digital signature polynomials using at least one of the message polynomials, at least one of the private key polynomials, and at least one of the ideals $p$ and $q$ such that the digital signature polynomials in unreduced form are not multiples of the private key polynomials in the ring R, and to verify the digital signature at least by confirming that a deviation between at least one of the message polynomials and at least one of the digital signature polynomials is less than a predetermined deviation threshold.

According to another embodiment of the present invention, there is provided an apparatus for generating and verifying a digital signature of a message, wherein the digital signature includes one or more digital signature polynomials. The apparatus includes a memory for storing ideals $p$ and $q$ of the ring R and a private key including one or more private key polynomials of the ring R. The apparatus also includes a processor operable to generate one or more message polynomials based on the message, to generate the digital signature polynomials using at least one of the message polynomials, at least one of the private key polynomials, and at least one of the ideals $p$ and $q$, and to verify the digital signature at least by confirming that a norm of at least one of the digital signature polynomials is less than a predetermined norm threshold.

According to another embodiment of the present invention, there is provided an apparatus for generating and verifying a digital signature of a message, wherein the digital signature includes one or more digital signature polynomials. The apparatus includes a memory for storing ideals $p$ and $q$ of the ring R, a private key including one or more private key polynomials of the ring R, and auxiliary multiple-use private information. The apparatus also includes a processor operable to generate one or more message polynomials based on the message, to generate the digital signature polynomials using at least one of the message polynomials, at least one of the private key polynomials, at least one of the ideals $p$ and $q$, and the auxiliary multiple-use private information, and to verify the digital signature at least by confirming that a deviation between the digital signature polynomials and the public key satisfy a predetermined relationship.

BRIEF DESCRIPTION OF THE DRAWINGS

The subsequent description of the preferred embodiments of the present invention refers to the attached drawings, wherein:

**FIG. 1** shows a flow diagram illustrating a method of generating and verifying a digital signature according to one presently preferred embodiment of the invention;

**FIG. 2** shows a flow diagram illustrating a method of generating and verifying a digital signature according to another presently preferred embodiment of the invention;

**FIG. 3** shows a flow diagram illustrating a method of generating and verifying a digital signature according to another presently preferred embodiment of the invention;

**FIG. 4** shows a flow diagram illustrating a method of generating and verifying a digital signature according to another presently preferred embodiment of the invention;

**FIG. 5** shows a flow diagram illustrating a method of generating and verifying a digital signature according to another presently preferred embodiment of the invention; and

**FIG. 6** shows a block diagram depicting a system for generating and verifying a digital signature according to another presently preferred embodiment of the invention.

DETAILED DESCRIPTION OF THE PREFERRED EMBODIMENTS

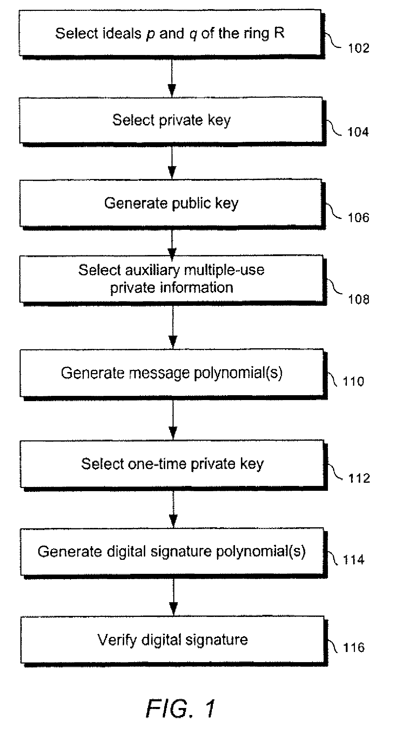

Referring now to the accompanying drawings, **FIG. 1** shows a flow diagram illustrating a method of generating and verifying a digital signature according to one presently preferred embodiment of the invention. The first step **102** in the generation of a digital signature is the selection of the ideals $p$ and $q$ of a ring R. Preferably, all operations modulo $p$ are taken in the interval $(-p/2, p/2]$, and all operations modulo $q$ are taken in the interval $(-q/2, q/2]$. A preferred ring

$R$ is $\mathbb{Z}[X]/(X^N-1)$, wherein $\mathbb{Z}$ is the ring of integers and $N$ is an integer greater than 1. In step **104**, a private encryption key is selected. The private key includes one or more polynomials of the ring R. Preferably, the private key includes two polynomials $f$ and $g$ of the ring R. The private key polynomials also may be described as a row vector:

$$f = (f_0, f_1, ..., f_{n-1}) = \sum_{i=0}^{n-1} f_i X^i \qquad (1)$$

The parameters $N, p,$ and $q$ are publicly known. Preferably, $p$ and $q$ are relatively prime integers, $\frac{N}{3} < q < \frac{2N}{3}$, , and $p << q$. For example, $(N, p, q) = (251, 3, 128)$ is one preferred choice of public parameter values. Additional public parameters include $S_f$ and $S_g$ (the spaces of allowable polynomials for private keys $f$ and $g$), as well as $S_r$ (the space of intermediate polynomials that the signer uses during the signing procedure). These spaces are designed to limit the relevant polynomials to vectors that have relatively short Euclidean length (in comparison to a

random vector from $\mathbb{Z}_q^N$ chosen with uniform distribution). For instance, polynomials having a Euclidean norm on the order of $\sqrt{N}$ shall be referred to as short, and polynomials having a Euclidean norm on the order of $N$ shall be referred to as somewhat short. Accordingly, the convolution of two short polynomials typically produces a somewhat short polynomial. Preferably, both short and somewhat short polynomials are included in the spaces $S_f$, $S_g$, and $S_r$.

There are three types of private keys that may be employed in the various embodiments of the present invention. According to the first type of keys, which shall be referred to as Key Type A, both $f$ and $g$ are short polynomials. According to the second type of keys, which shall be referred to as Key Type B, both $f$ and $g$ are short polynomials, and $f \equiv g \equiv k$ (mod $p$) for some polynomial $k$ (that is, the coefficients of $f$, $g$, and $k$ are congruent modulo $p$). A third type of key, which is used primarily for a one-time private key $e$, shall be referred to as Key Type C. According to Key Type C, $e$ is a short polynomial, but the coefficient $e_0$ is somewhat large (e.g., $q/2p$).

After selecting the private key, a public key is generated in step **106**. Preferably, the public key includes one or more public key polynomials. For instance, if the private key includes the polynomials $f$ and $g$, a suitable public key polynomial $h$ may be generated using the equation:

$$h = f_q^{-1} * g \pmod{q} \qquad (2)$$

The polynomial $f_q^{-1}$ in Equation 2 denotes the inverse of the polynomial $f$ in $R_q = \mathbb{Z}_q[X]/(X^N-1)$. The "*" represents standard convolution, or polynomial multiplication, over $\mathbb{Z}[X]/(X^N-1)$;

$$\left(f * g\right)_k = \sum_{i+j=k \bmod n} f_i g_j \qquad (3)$$

A new private key and public key need not be generated for every signature. Rather, so long as the private key is not compromised, the same private key and public key may be used repeatedly to generate and verify numerous digital signatures. In this way, the private key polynomials $f$ and $g$, and the public key polynomial $h$, may be referred to as being multiple-use keys.

Optionally, in step **108**, auxiliary multiple-use private information is selected. The auxiliary multiple-use private information, which may include one or more auxiliary private polynomials of the ring R, supplements the private key, but is not itself directly related to the private key. The auxiliary multiple-use private information may be used in the generation of digital signatures to prevent the signatures from leaking useful information about the private key. This provides a defense against the second-order averaging attack, which exploits weaknesses in signatures that leak useful information about the private key.

The use of averaging attacks against NSS signatures is described in the Cryptanalysis of NSS papers. In short, an averaging attack determines a private key by analyzing the convergence of a number of digital signatures signed with that key. Because the elements that are used to generate a digital signature, other than the private key itself, are either random or known, a series of signatures created using the same private key will converge on a value related to the private key. For instance, the known elements converge on a known average, and the random elements become predictable over a large sample of signatures. By multiplying a series of digital signature polynomials by their reverse polynomials, it is possible to remove the known averages and to isolate $f * f_{rev}$, which provides information directly related to the private key. Through this type of analysis over a transcript of signatures created using a particular private key, cryptanalysts have been able to extract information about the private key, and ultimately to determine the private key itself.

The present invention presents multiple defenses to this type of averaging attack. For example, one defense involves deceiving the averaging attack by manipulating the convergence of a series of signatures. For example, a short or somewhat short polynomial $r$ may be randomly generated such that $r = a' * f'$ for a fixed and short $f'$. The vector $f'$ is auxiliary multiple-use private information, supplemental to the private key, but need not be and preferably is not related to either the private key or the public key. Then, if an attacker performs an averaging attack on a transcript of signature polynomials of the form $r + a * f$, for example, he can recover only a useless value related to $f * f_{rev} + f' * f'_{rev}$, rather than the useful value of $f * f_{rev}$.

Another procedure for defending against an averaging attack according to the present invention is to keep the averaging attack from converging in a reasonable time. For example, compute an intermediate private polynomial $a = f_p^{-1}(m - t - d) \pmod{p}$ may be computed, where $d$ is another random and very short polynomial. The $d$ polynomial acts as noise that delays the convergence of $f * f_{rev}$. However, the use of the $d$ polynomial in this manner introduces more deviations into the relevant digital signature polynomial. Accordingly, this approach preferably is used for a signature polynomial that is tested using a Euclidean norm constraint rather than a deviation constraint, as described more fully below.

Returning to the method shown in **FIG. 1**, one or more message polynomials are generated in step **110**. This step is message-dependent, and must be repeated for each new digital signature. Preferably the message polynomials are of the ring R, which allows convenient manipulation of the message polynomials in connection with the polynomials of the private key and the public key. The message polynomials may be generated according to known methods using one or more hash functions.

A one-time private key may be selected in step **112**. Unlike the multiple-use private key, the one-time private key is used to generate a single signature. A new one-time private key is selected for generation of the next signature. Selection of a one-time private key is optional, but may be used to increase the security of the digital signature, particularly with respect to an averaging attack, as described more fully below.

Generation of the digital signature takes place in step **114**. Preferably the digital signature includes one or more digital signature polynomials that are generated based on the message polynomials and the private key polynomials. The digital signature optionally may be generated using auxiliary multiple-use private information and/or a one-time private key in addition to the message polynomials and the private key polynomials.

Once a digital signature is created, the signer transmits the message along with the digital signature to an intended recipient. The recipient then may verify the digital signature in step **116**. The verification may include one or more types of comparisons between the message, the digital signature, and the public key, which preferably is known to the verifier. For instance, the verifier may confirm a predetermined relationship between the digital signature polynomials and the public key polynomials. Additionally, the verifier may confirm that the deviation between the digital signature polynomials and the message polynomials is less than or equal to a predetermined deviation threshold. For $a, b \in \mathbb{Z}_q [X]/(X^N - 1)$, the deviation between $a$ and $b$ is denoted:

$$Dev(a,b) = \#\{i : f_i \neq g_i \pmod{p}\} \qquad (4)$$

The verifier also may confirm that a norm of one or more of the digital signature polynomials is less than or equal to a predetermined norm threshold. Various norms may be used to constrain the digital signature polynomials, including, for instance, the L1 norm, the L2 (or Euclidean) norm, or any of the higher-order Lp norms. For the sake of convenience, the Euclidean norm is preferred.

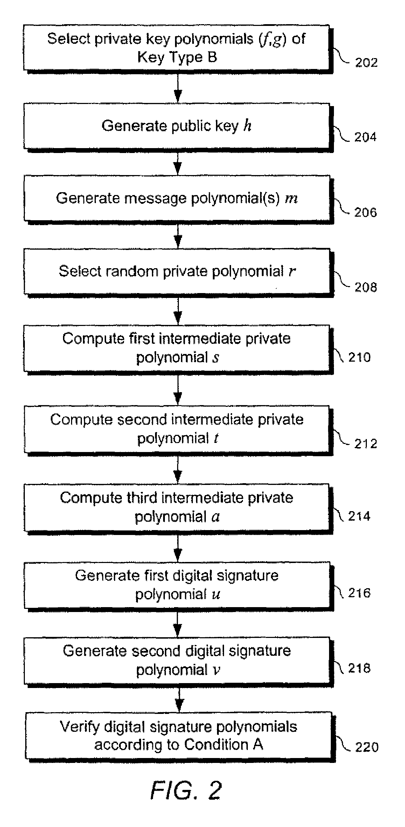

In the course of verifying a signature, the verifier generally uses a combination of two, or all three of these types of comparisons. For instance, the signature generally should confirm the predetermined relationship between the digital signature and the public key. In addition to this first test, the verifier generally should confirm at least one other comparison (*i.e.*, the deviation constraint and/or the norm constraint) with respect to the digital signature polynomials. Various signature generation and verification procedures of the present invention will now be described in more detail with respect to **FIGS. 2-5.**

**FIG. 2** shows a flow diagram illustrating a method of generating and verifying a digital signature according to another presently preferred embodiment of the invention. In step **202**, a private key is selected. Preferably, the private key is of Key Type B, including two short polynomials $f$ and $g$ of the ring R, where $f \equiv g \equiv k \pmod{p}$ for some polynomial $k$. Based on the private key, a public key is then generated in step **204**. The public key preferably includes a public key polynomial $h$ that is computed according to Equation 2.

One or more message polynomials $m$ are then generated in step 206 based on the message to be signed. For instance, a message polynomial $m$ preferably is computed using a hash function $H(m)$, where $H$ is a secure hash function. Alternatively, the message polynomials may include two separate hashes, $H_1(m)$ and $H_2(m)$. Also, randomness may be added to the hash functions. For instance, a message polynomial may be computed as H(m,c), where $c$ is a random value that will become part of the signature.

Optionally, in step **208,** a random private polynomial $r$ is selected from the space $S_r$ such that $r(1) = 0$. Selection of $r$ such that $r(1) = 0$ is not necessary, but is preferred for reasons explained below. Preferably, $r$ also should be a short or somewhat short polynomial. If a random private key $r$ is selected in step **208,** then in step **210,** a first intermediate private polynomial $s$ is computed according to the equation:

$$s = pr * (1 - h)^{-1} \pmod{q} \qquad (5)$$

For efficiency, the parameter $(1 - h)^{-1}$ may be pre-computed and stored as $s'$. In step **212,** a second intermediate private polynomial $t$ is computed according to the equation:

$$t = s * h \pmod{q} \qquad (6)$$

Generally, $s$ and $t$ should be selected such that $s * h = t$, and such that $s$ and $t$ are substantially congruent modulo $p$. This preserves the proper public key relationship between the digital signature polynomials $u$ and $v$ calculated in Equations 8 and 9, and helps to minimize the number of deviations between the message polynomial $m$ and the digital signature polynomials $u$ and $v$. Equations 5 and 6 provide one preferred method of achieving the proper relationship between $s$ and $t$.

A third intermediate private polynomial a is computed in step **214** according to the equation:

$$a = f_p^{-1} * (m - s) \pmod{p} \qquad (7)$$

Generally, the third intermediate polynomial $a$ should be selected such that $a$ is a small polynomial and so as to minimize the deviations between the message polynomial $m$ and the digital signature polynomials $u$ and $v$ calculated in Equation 9. Equation 7 provides one preferred method of computing an appropriate third intermediate polynomial $a$.

The calculation of the three intermediate private polynomials $s$, $t$, and $a$ is intended to produce as few deviations from the message polynomial $m$ as possible. The selection of a random private polynomial $r$ such that $r(1) = 0$, as described above, ensures that $s$ and $t = s * h$ (mod $q$) = $s - pr$ (mod $q$) deviate in approximately the same way (*i.e.*, $s$ and $t$ deviate in the same coefficient positions). Given that $s$ and $t$ deviate in the same way, their deviations can be corrected in tandem using the intermediate private polynomial $a$ computed according to Equation 7.

Given the three intermediate private polynomials, a first digital signature polynomial $u$ is generated in step **216** according to the equation:

$$u = s + a * f \pmod{q} \qquad (8)$$

A second digital signature polynomial $v$ then is generated in step **218** according to the equation:

$$v = t + a * g \pmod{q} \qquad (9)$$

The polynomial pair ($u$, $v$) is the signature of the message. The addition of private intermediate polynomials $s$ and $t$ in the generation of the digital signature polynomials $u$ and $v$ is one of the ways that the present invention overcomes one of the security flaws found in NSS. This is because NSS signatures are simply multiples of the private key polynomials reduced modulo $q$: ($s$,$t$) = ($f * w$, $g * w$) (mod $q$) for some short multiplier polynomial $w$. As a result, NSS signatures have been subject to successful attacks that allow the attacker to learn the private keys $f$ and $g$, as described more fully in the Cryptanalysis of NSS papers. By adding the private intermediate polynomials $s$ and $t$ to the signature polynomials $u$ and $v$, this embodiment of the present invention ensures that $u$ and $v$, in unreduced form (*i.e.*, before reduction modulo $q$), are not multiples of the private key polynomials in the ring R. In other words, $u$ and $v$, when divided in the ring $R_q$ by the private key polynomials $f$ and $g$, respectively, yield somewhat short or larger polynomials. Other embodiments of the present invention employ intermediate private polynomials in the same manner.

If two hashes, $H_1(m)$ and $H_2(m)$ were used instead of $m$ or $H(m)$ to generate the signature, then the term $pr$ in Equation 5 should be replaced with a short or somewhat short random private polynomial $r$ that is congruent to $H_1(m)$ - $H_2(m)$ (mod $p$), and $a$ should be computed according to the following modified version of Equation 7:

$$a = f_p^{-1} * (H_1(m) - s) \pmod{p} \qquad (10)$$

After generating the digital signature as described above, the signer transmits the message, the message polynomial $m$, and one or both of the digital signature polynomials $u$ and $v$ to an intended recipient. The recipient verifier then may verify the digital signature in step **220** at least by performing two comparisons. Collectively, these two comparisons shall be referred to as Condition A. In the first comparison, the verifier confirms that the digital signature polynomials and the signer's public key satisfy the predetermined relationship $v = u * h$ (mod $q$). Alternatively, if the signer transmitted only one of the digital signature polynomials, such as $u$ for instance, the verifier may compute the other digital signature polynomial $v$ according to the predetermined relationship set forth above. This alternative, which generally applies to the various embodiments of the present invention, increases transmission efficiency by reducing the size of the digital signature that is transmitted. In either case, the verifier is required to conduct the second comparison to fully satisfy Condition A.

In the second comparison, the verifier confirms that the deviation between the message polynomial $m$ and each of the first and the second digital signature polynomials $u$ and $v$ is less than a predetermined deviation threshold. If two different hashes, $H_1(m)$ and $H_2(m)$, were used to generate the signature polynomials, then $u$ should be checked for deviations from $H_1(m)$, and $v$ should be checked for deviations from $H_2(m)$. A deviation threshold of, for instance, $N/5$ coefficients per polynomial (*i.e.*, approximately 50 deviations for $N = 251$) may be chosen to significantly reduce the likelihood of a forgery attack such as the one used to successfully forge NSS signatures, as described above. If both of the comparisons are satisfied, the verifier deems the signature authentic.

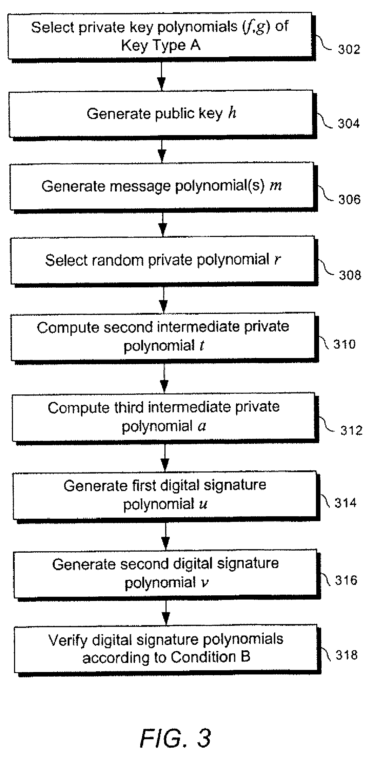

To further increase security, the deviation threshold may be set even lower. Experimental results indicate that this particular embodiment of the present invention is capable of reliably generating digital signatures with less than $N/8$ deviations (*i.e.*, less than 31 deviations for $N = 251$) without leaking useful information about the signer's private key. Other embodiments of the invention allow for even further reduction of the deviation threshold. One such alternative embodiment will now be described with reference to **FIG. 3**.

FIG. 3 shows a flow diagram illustrating a method of generating and verifying a digital signature according to another presently preferred embodiment of the invention. In step **302**, a private key is selected. Preferably, the private key is of Key Type A, including two short polynomials $f$ and $g$. Note that the polynomials of Key Type A may be shorter (*i.e.*, of lesser Euclidean norm) than the polynomials of Key Type B. This is because the polynomials of Key Type B must be not equal to one another and at the same time must be congruent modulo $p$. As a result, one of the private key polynomials of Key Type B necessarily must have coefficients of larger magnitude. This is not required of the polynomials of Key Type A. The shorter private key polynomials of Key Type A therefore are less affected by the reduction modulo $q$, and thus the digital signature polynomials generated from Key Type A polynomials ultimately have fewer deviations from the message polynomials.

In step **304,** a public key is generated. As in the previous embodiment, the public key preferably includes a public key polynomial $h$ that is computed according to Equation 2. One or more message polynomials $m$ are then generated in step 306 based on the message to be signed. For instance, as described above, a message polynomial $m$ preferably is computed using a hash function $H(m)$. Alternatively, the message polynomials may include two separate hashes, $H_1(m)$ and $H_2(m)$. Also, randomness may be added to the hash function. For instance, a message polynomial $m$ may be computed as $H(m,c)$, where $c$ is a random value that will become part of the signature.

In step **308,** a random private polynomial $r$ is selected from the space $S_r$. Preferably, the polynomial $r$ is short or somewhat short. In step **310,** a first intermediate private polynomial $t$ is computed according to the equation:

$$t = r * h \,(\mathrm{mod}\ q) \qquad\qquad (11)$$

In step **312,** a second intermediate private polynomial $a$ then is computed according to the equation:

$$a = g_p^{-1} * (m - t)\,(\mathrm{mod}\ p) \qquad\qquad (12)$$

Consistent with the verification conditions described below, the second intermediate private polynomial $a$ is calculated to be short, and the calculation of the two intermediate private polynomials $t$ and $a$ is intended to produce as few deviations as possible between the second digital signature polynomial v, computed according to Equation 14, and the message polynomial $m$.

Given the two intermediate private polynomials, a first digital signature polynomial $u$ is generated in step **314** according to the equation:

$$u = r + a * f \,(\mathrm{mod}\ q) \qquad\qquad (13)$$

A second digital signature polynomial $v$ then is generated in step **316** according to the equation:

$$v = t + a * g \,(\mathrm{mod}\ q) \qquad\qquad (14)$$

The polynomial pair ($u$, $v$) is the signature of the message. If two hashes, $H_1(m)$ and $H_2(m)$ were used instead of $m$ to generate the signature, then $a$ should be computed according to the following modified version of Equation 12:

$$a = g_p^{-1} * \left(H_2(m) - t\right)\left(\mathrm{mod}\ p\right) \qquad\qquad (15)$$

After generating the digital signature as described above, the signer transmits the message, the message polynomial $m$, and the digital signature polynomials $u$ and $v$ to an intended recipient. The recipient verifier then may verify the digital signature in step **318** by performing three comparisons. Collectively, these three comparisons shall be referred to as Condition B. First, the verifier confirms that the digital signature polynomials and the signer's public key satisfy the predetermined relationship $v = u * h$ (mod $q$). Second, the verifier confirms that the first digital signature polynomial $u$ is somewhat short. Third, the verifier confirms that the deviation between the message polynomial $m$ and the second digital signature polynomial *v* is less than a predetermined deviation threshold. If each of the three comparisons are satisfied, the verifier deems the signature authentic.

If two different hashes, $H_1(m)$ and $H_2(m)$, were used to generate the signature polynomials, then *v* should be checked for deviations from $H_2(m)$, and the Euclidean norm constraint on *u* should be checked by confirming that the differential polynomial $d = u - H_1(m)$ is somewhat short.

Note that according to this embodiment, only the second digital signature polynomial *v* must satisfy a deviation condition with respect to the message polynomial *m*. This is because the first digital signature polynomial *u* is separately constrained by the second comparison, which requires that *u* be somewhat short. In this way, Condition B is a more rigorous set of criterion than Condition A because the deviation threshold is a local metric, which allows an attacker to ignore a number of coefficient positions. The Euclidean norm threshold, by contrast, is a global criterion, which is strongly influenced by every coefficient.

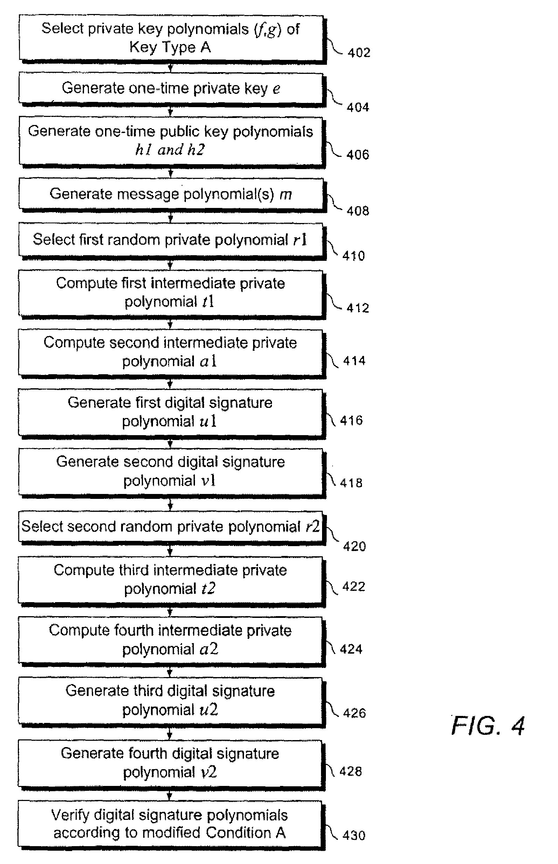

As in the previous embodiment, a deviation threshold of, for example, *N*/5 coefficients per polynomial (*i.e.*, approximately 50 deviations for *N* = 251) may be chosen to significantly reduce the likelihood of a forgery attack such as the one used to successfully forge NSS signatures, as described above. To further increase security, the deviation threshold may be set even lower. Experimental results indicate that this particular embodiment of the present invention is capable of reliably generating digital signatures with *N*/12 or less deviations (*i.e.*, 20 or less deviations for *N* = 251) without leaking useful information about the signer's private key. The next embodiment, described now with reference to **FIG. 4**, is capable of achieving similarly secure signatures.

**FIG. 4** shows a flow diagram illustrating a method of generating and verifying a digital signature according to another presently preferred embodiment of the invention. In step **402**, a private key is selected. As in the previous embodiment, the private key preferably is of Key Type A, including two short polynomials *f* and *g*. A one-time private key polynomial *e* then is generated in step **404**. Given *f, g,* and *e,* a pair of one-time public key polynomials $h_1$ and $h_2$ preferably is generated in step **406** according to the equations:

$$h_1 = f^{-1} * e \,(\mathrm{mod}\ q) \tag{16}$$

$$h_2 = g^{-1} * e \,(\mathrm{mod}\ q) \tag{17}$$

Alternatively, $h_1$ and $h_2$ could be generated according to the equations:

$$h_1 = e^{-1} * f \,(\mathrm{mod}\ q) \tag{18}$$

$$h_2 = e^{-1} * g \,(\mathrm{mod}\ q) \tag{19}$$

Equations 18 and 19 produce suitable polynomials for $h_1$ and $h_2$, but require computation of the inverse one-time private key $e^{-1}$ (mod *q*) on the fly. In addition, the use of Equations 18 and 19 requires similar substitution of *e, f,* and *g* in Equations 21-23 and 25-27 below.

Although the one-time public key polynomials $h_1$ and $h_2$ used to generate a signature according to this embodiment change with each new signature, the multiple-use public key polynomial *h* used to verify the signatures remains the same.

One or more message polynomials *m* based on the message to be signed are then generated in step **408**. For instance, as described above, a message polynomial *m* preferably is computed using a hash function $H(m)$, where *H* is a secure hash function. Alternatively, the message polynomials may include two separate hashes, $H_1(m)$ and $H_2(m)$. Also, randomness may be added to the hash functions. For instance, a message polynomial *m* may be computed as H(m,c), where c is a random value that will become part of the signature.

In step **410**, a first random private polynomial $r_1$ is selected from the space $S_r$. Preferably, the polynomial $r_1$ is short or somewhat short. In step **412**, a first intermediate private polynomial $t_1$ is computed according to the equation:

$$t_1 = r_1 * h_1 \,(\mathrm{mod}\ q) \tag{20}$$

Then, in step **414,** a second intermediate private polynomial $a_1$ is computed according to the equation:

$$a_1 = e_p^{-1} * \left(m - t_1\right)(\mathrm{mod}\ p) \tag{21}$$

Given the first two intermediate private polynomials, a first digital signature polynomial $u_1$ is generated in step **416** according to the equation:

$$u_1 = r_1 + a_1 * f \,(\mathrm{mod}\ q) \tag{22}$$

A second digital signature polynomial $v_1$ then is generated in step **418** according to the equation:

$$v_1 = t_1 + a_1 * e \,(\mathrm{mod}\ q) \tag{23}$$

In step **420,** a second random private polynomial $r_2$ is selected from the space $S_r$. Preferably, the polynomial $r_2$ is short or somewhat short. In step **422,** a third intermediate private polynomial $t_2$ is computed according to the equation:

$$t_2 = r_2 * h_2 \,(\mathrm{mod}\ q) \tag{24}$$

In step **424,** a fourth intermediate private polynomial $a_2$ is computed according to the equation:

$$a_2 = f_p^{-1} * (m - t_2) \,(\mathrm{mod}\ p) \tag{25}$$

The calculation of the four intermediate private polynomials $t_1$, $t_2$, $a_1$, and $a_2$ is intended to produce as few deviations from the message polynomial $m$ as possible.

Given the third and fourth intermediate private polynomials, a third digital signature polynomial $u_2$ is generated in step **426** according to the equation:

$$u_2 = r_2 + a_2 * g \,(\mathrm{mod}\ q) \tag{26}$$

A fourth digital signature polynomial $v_2$ then is generated in step **428** according to the equation:

$$v_2 = t_2 + a_2 * e \,(\mathrm{mod}\ q) \tag{27}$$

Collectively, the four digital signature polynomials ($u_1$, $u_2$, $v_1$, $v_2$) constitute the signature of the message.

After generating the digital signature as described above, the signer transmits the message, the message polynomial $m$, and the digital signature polynomials $u_1$, $u_2$, $v_1$, and $v_2$ to an intended recipient. The recipient verifier then may verify the digital signature in step **430** by performing a modified version of the three Condition B comparisons described with reference to the previous embodiment. First, the verifier confirms that the digital signature polynomials and the signer's multiple-use public key satisfy the predetermined relationship $\left(\dfrac{v_1}{u_1}\right) * \left(\dfrac{u_2}{v_2}\right) = h \pmod q$. Second, the verifier confirms that each of the first and third digital signature polynomials $u_1$ and $u_2$ is somewhat short. Third, the verifier confirms that the deviation between the message polynomial $m$ and each of the second and fourth digital signature polynamials $v_1$ and $v_2$ is less than a predetermined deviation threshold. If two separate hashes, $H_1(m)$ and $H_2(m)$, were used to generated the signature polynomials, then $v_1$ should be checked for deviations from $H_1(m)$, and $v_2$ should be checked for deviations from $H_2(m)$. If each of the three comparisons described above are satisfied, the verifier deems the signature authentic.

Note that according to this embodiment, only the second and fourth digital signature polynomials $v_1$ and $v_2$ need be compared for deviations from the message polynomial $m$. This is because, similar to the previous embodiment, the first and third digital signature polynomials $u_1$ and $u_2$ are separately constrained by the second comparison, the more rigorous Euclidean norm threshold, which requires that both $u_1$ and $u_2$ be somewhat short. In addition, the use of a one-time private key in this embodiment protects the digital signatures from the averaging attack, which was used to uncover the private keys of NSS signatures. The one-time private key is designed to obviate an averaging attack. Because the $v$ polynomials are related only to the one-time (single-use) private key, an averaging attack involving these polynomials reveals no useful cryptanalytic information. The averaging attack is necessarily limited to cryptanalysis of the $u$ polynomials.

For further protection from an averaging attack on the $u$ polynomials, auxiliary multiple-use private polynomials $f'$ and $g'$ may be included in the generation of the digital signature polynomials. In particular, $r_1$ may be computed as $r_1 = a_{1'} * f'$, and $r_2$ may be computed as $r_2 = a_{2'} * g'$. As described above, the use of auxiliary multiple-use private polynomials $f'$ and $g'$ manipulates the convergence of a transcript of digital signature polynomials, making it significantly more difficult to obtain useful information about the private key polynomials $f$ and $g$ using an averaging attack. For an even further measure of protection, more than one auxiliary multiple-use private polynomial may be used to generate each digital signature polynomial. For instance, $r_1$ may be computed as $r_1 = a_{1'} * f' + a_{1''} * f''$, and $r_2$ may be computed as $r_2 = a_{2'} * g' + a_{2''} * g''$.

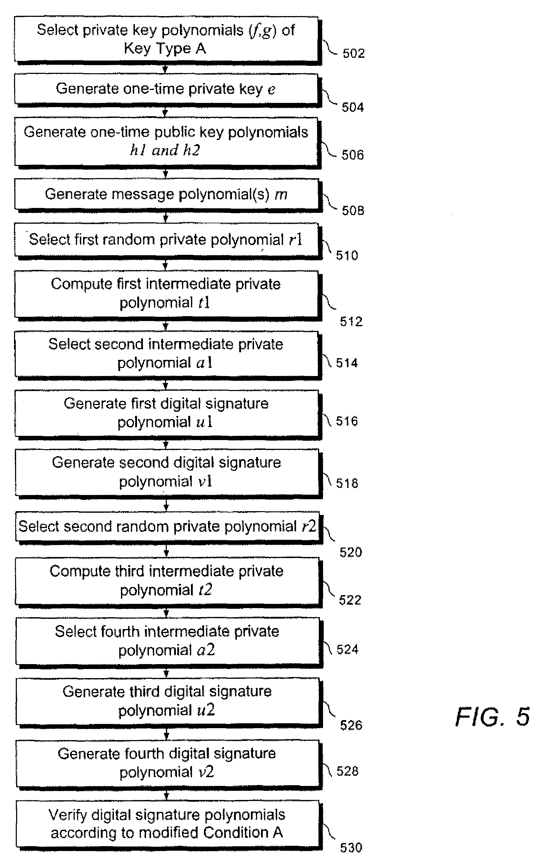

Regarding the deviation constraint, as in the previous embodiment, a threshold of, for example, $N/5$ coefficients per polynomial (*i.e.*, approximately 50 deviations for $N = 251$) may be chosen to significantly reduce the likelihood of a forgery attack such as the one used to successfully forge NSS signatures, as described above. To further increase security, the deviation threshold may be set even lower. Experimental results indicate that, like the previous embodiment, this embodiment of the present invention is capable of reliably generating digital signatures with $N/12$ or less deviations (*i.e.*, 20 or less deviations for $N = 251$) without leaking useful information about the signer's private key. The next embodiment, described with reference to **FIG. 5**, provides an even greater degree of security by further reducing the number of acceptable deviations.

**FIG. 5** shows a flow diagram illustrating a method of generating and verifying a digital signature according to another presently preferred embodiment of the invention. In step **502,** a private key is selected. As in the previous embodiment, the private key preferably is of Key Type A, including two short polynomials $f$ and $g$. A one-time private key polynomial $e$, preferably of Key Type C, then is generated in step 504, preferably such that the first coefficient $e_0$ is somewhat large (*e.g., q/2p*). Given $f$, $g$, and $e$, a pair of public key polynomials $h_1$ and $h_2$ preferably is generated in step **506** according to the Equations 16 and 17, although $h_1$ and $h_2$ also could be generated according to Equations 18 and 19 in the alternative.

As described with reference to the previous embodiment, although one-time public key polynomials $h_1$ and $h_2$ used to generate a signature change with each new signature, the multiple-use public key polynomial $h$ used to verify the signatures remains the same.

One or more message polynomials $m$ based on the message to be signed are then generated in step **508.** For instance, as described above, a message polynomial $m$ preferably is computed using a hash function $H(m)$, where $H$ is a secure hash function. Alternatively, the message polynomials may include two separate hashes, $H_1(m)$ and $H_2(m)$. Also, randomness may be added to the hash functions. For instance, a message polynomial $m$ may be computed as $H(m,c)$, where $c$ is a random value that will become part of the signature.

In step **510,** a first random private polynomial $r_1$ is selected from the space $S_r$. Preferably, the polynomial $r_1$ is short or somewhat short. In step **512,** a first intermediate private polynomial $t_1$ is computed according to the equation:

$$t_1 = r_1 * h_1 \pmod q \qquad\qquad (28)$$

In step **514,** a second intermediate private polynomial $a_1$, which should be short, is selected such that the quantity $t_1 +$

$a_1 * e$ (mod $q$) has few or no deviations from the message $m$. More specifically, the coefficients of $a_1$ are selected such that $v_1$, computed below using Equation 30, has few or no deviations modulo $p$ from the message polynomial $m$. In addition, the somewhat large coefficient $e_0$ of the one time private key $e$ may be selected such that the coefficients of the quantity $t_1 + a_1 * e$ (mod $q$) are close to the center of the interval $(-q/2, q/2]$, which helps to prevent those coefficients from being reduced in the modulo $q$ operation, thereby further reducing the likelihood of deviations modulo $p$.

Given the first two intermediate private polynomials $t_1$ and $a_1$, a first digital signature polynomial $u_1$ is generated in step **516** according to the equation:

$$u_1 = r_1 + a_1 * f \ (\text{mod} \ q) \qquad (29)$$

A second digital signature polynomial $v_1$ is then generated in step **518** according to the equation:

$$v_1 = t_1 + a_1 * e \ (\text{mod} \ q) \qquad (30)$$

In step **520,** a second random private polynomial $r_2$ is selected from the space $S_r$. Preferably, the polynomial $r_2$ is short or somewhat short. Then, in step **522,** a third intermediate private polynomial $t_2$ is computed according to the equation:

$$t_2 = r_2 * h_2 \ (\text{mod} \ q) \qquad (31)$$

in step **524,** a fourth intermediate private polynomial $a_2$ , which should be short, is selected such that the quantity $t_2 + a_2 * e$ (mod $q$) has few or no deviations from the message polynomial $m$. This is accomplished in a manner similar to that described above with respect to $a_1$ in step **514**. In selecting the values for the polynomials $a_1$ and $a_2$ and the coefficient $e_0$, the primary focus is on preventing deviations in the second and fourth digital signature polynomials $v_1$ and $v_2$. Although $a_1$ and $a_2$ must be short polynomials to ensure that $u_1$ and $u_2$ are somewhat short, there is no need to prevent deviations in $u_1$ or $u_2$ because the verification constraint for $u_1$ and $u_2$ depends on their Euclidean norm rather than their deviation from $m$. This allows for extremely precise manipulation of the coefficients in $v_1$ and $v_2$, which enables effective prevention of deviations in $v_1$ and $v_2$.

Given the third and fourth intermediate private polynomials, a third digital signature polynomial $u_2$ is generated in step **526** according to the equation:

$$u_2 = r_2 + a_2 * f \ (\text{mod} \ q) \qquad (32)$$

A fourth digital signature polynomial $v_2$ is then generated in step **528** according to the equation:

$$v_2 = t_2 + a_2 * e \ (\text{mod} \ q) \qquad (33)$$

Collectively, the four digital signature polynomials ($u_1$, $u_2$, $v_1$, $v_2$) constitute the signature of the message.

After generating the digital signature as described above, the signer transmits the message, the message polynomial $m$, and the digital signature polynomials $u_1$, $u_2$, $v_1$, and $v_2$ to an intended recipient. The recipient verifier then may verify the digital signature in step **530** by performing the same three modified Condition B comparisons that were used in the previous embodiment. First, the verifier confirms that the digital signature polynomials and the signer's multiple-use public key satisfy the predetermined relationship $\left(\dfrac{v_1}{u_1}\right) * \left(\dfrac{u_2}{v_2}\right) = h \ (\text{mod} \ q)$. Second, the verifier confirms that each of the first and third digital signature polynomials $u_1$ and $u_2$ is somewhat short. Third, the verifier confirms that the deviation between the message $m$ and each of the second and fourth digital signature polynomials $v_1$ and $v_2$ is less than a predetermined deviation threshold. If all three comparisons are satisfied, the verifier deems the signature to be authentic.

Note that according to this embodiment, only the second and fourth digital signature polynomial $v_1$ and $v_2$ need be compared for deviations from the message. This is because, as in the previous embodiment, the first and third digital signature polynomials $u_1$ and $u_2$ are separately constrained by the second comparison, the more rigorous Euclidean norm threshold, which requires that both $u_1$ and $u_2$ be somewhat short. In addition, the use of a one-time private key $e$ in this embodiment protects it from an averaging attack, as described more fully above with respect to the previous embodiment.

For further protection from an averaging attack, as in the previous embodiment, auxiliary multiple-use private polynomials $f'$ and $g'$ may be included in the generation of the digital signature polynomials. In particular, $r_1$ may be computed as $r_1 = a_{1'} * f'$, and $r_2$ may be computed as $r_2 = a_{2'} * g'$. As described above, the use of auxiliary multiple-use private polynomials $f'$ and $g'$ manipulates the convergence of a transcript of digital signature polynomials, making it significantly more difficult to obtain useful information about the private key polynomials $f$ and $g$ using an averaging attack. For an even further measure of protection, more than one auxiliary multiple-use private polynomial may be used to generate each digital signature polynomial. For instance, $r_1$ may be computed as $r_1 = a_{1'} * f' + a_{1''} * f''$, and $r_2$ may be computed as $r_2 = a_{2'} * g' + a_{2''} * g''$.

As in the previous embodiment, a deviation threshold of, for example, $N/5$ coefficients per polynomial (*i.e.*, approximately 50 deviations for $N = 251$) may be chosen to significantly reduce the likelihood of a forgery attack such as the one used to successfully forge NSS signatures, as described above. To further increase security, the deviation threshold may be set even lower. Due largely to the precise control allowed over the polynomials $a_1$ and $a_2$ and the coefficient $e_0$, experimental results indicate that this embodiment of the invention is capable of reliably generating digital signatures with $N/100$ or less deviations (*i.e.*, 2 or less deviations for $N = 251$) without leaking useful information about the signer's private key. In fact, with care in selecting $a_1$, $a_2$, and $e_0$ in this embodiment, the signer can reliably generate digital signatures with no deviations at all, while still leaking no useful information about the private key.

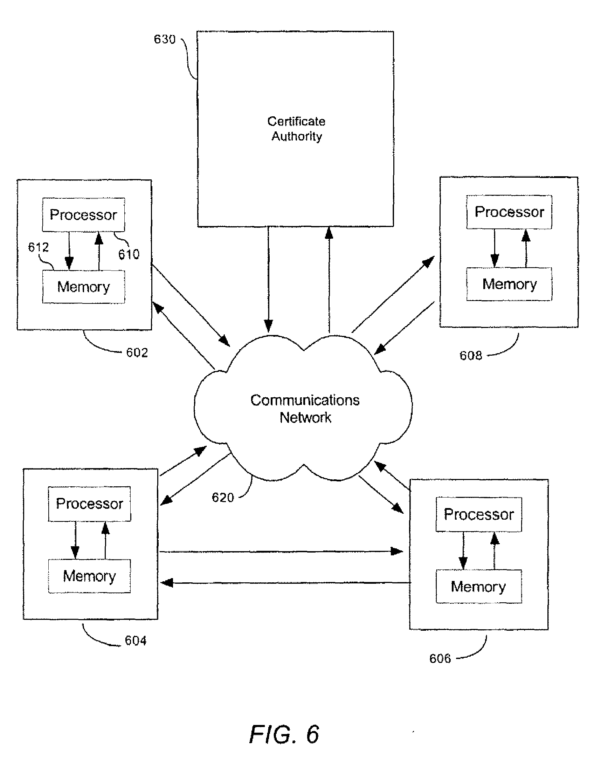

Various methods of generating and verifying digital signatures according to the present invention have been described. A system for implementing these methods according to another embodiment of the present invention will now be described with reference to **FIG. 6**. The system includes a number of users **602, 604, 606, 608,** each of which may act as a signer and/or a verifier. Each user includes a processor 610 in bidirectional communication with a memory **612**. The processor **610** executes suitable program code for carrying out the procedures described above, and for generating information to be transmitted to another user. Suitable program code may be created according to methods known in the art. The memory 612 stores the program code, as well as intermediate results and other information used during execution of the digital signature generation and verification procedures.

A communications network **620** is provided over which users may communicate. The communications network **620** may be of various common forms, including, for instance, a LAN computer network, a WAN computer network, and/or a mobile telephone network provide suitable communication networks.

According to the present invention, user **602** may generate and transmit a digital signature via the communications network **620** to user **608**. User **608** then may verify the signature of user **602** according to the procedures described above. Users **604** and **606** may communicate in a similar manner via the communications network **620.** In addition, users **604** and 606 may communicate directly with one another via a suitable direct communications link as shown in **FIG. 6**.

A trusted certificate authority **630** is provided to store and distribute public keys associated with the various users **602, 604, 606, 608.** For instance, before verifying a signature from user **608**, user **602** may request the certificate authority **630** to provide a copy of the public key for user 608 to be used in the verification procedures described above.

The invention has been described in detail with particular reference to preferred embodiments thereof and illustrative examples, but it will be understood that variations and modifications can be effected within the spirit and scope of the invention.

**Claims**

1. An apparatus for generating a digital signature of a message, wherein the digital signature includes one or more digital signature polynomials,
   **CHARACTERIZED IN THAT** the apparatus comprises:

   a memory for storing ideals $p$ and $q$ of the ring R and a private key including one or more private key polynomials of the ring R; and
   a processor operable to generate one or more message polynomials based on the message, to generate the digital signature polynomials using at least one of the message polynomials, at least one of the private key polynomials, and at least one of the ideals *p* and *q*,

such that the digital signature may be verified at least by one of the following:

confirming that a deviation between at least one of the message polynomials and at least one of the digital signature polynomials is less than a predetermined deviation threshold;

confirming that a norm of at least one of the digital signature polynomials is less than a predetermined norm threshold; or

confirming that a deviation between the digital signature polynomials and a public key satisfy a predetermined relationship.

2. An apparatus as claimed in claim 1, wherein the digital signature polynomials in unreduced form are not multiples of the private key polynomials in the ring R.

3. An apparatus as claimed in claim 1, wherein the memory stores auxiliary multiple-use private information that is unrelated to the private key; wherein the processor generates the one or more message polynomials also using the auxiliary multiple-use private information.

Select ideals $p$ and $q$ of the ring R — 102

Select private key — 104

Generate public key — 106

Select auxiliary multiple-use private information — 108

Generate message polynomial(s) — 110

Select one-time private key — 112

Generate digital signature polynomial(s) — 114

Verify digital signature — 116

*FIG. 1*

Select private key polynomials $(f,g)$ of Key Type B ⟍ 202

Generate public key $h$ ⟍ 204

Generate message polynomial(s) $m$ ⟍ 206

Select random private polynomial $r$ ⟍ 208

Compute first intermediate private polynomial $s$ ⟍ 210

Compute second intermediate private polynomial $t$ ⟍ 212

Compute third intermediate private polynomial $a$ ⟍ 214

Generate first digital signature polynomial $u$ ⟍ 216

Generate second digital signature polynomial $v$ ⟍ 218

Verify digital signature polynomials according to Condition A ⟍ 220

*FIG. 2*

```
┌─────────────────────────────────────┐
│  Select private key polynomials (f,g) of │ ⟍ 302
│          Key Type A                  │
└─────────────────────────────────────┘
                  │
                  ▼
┌─────────────────────────────────────┐
│        Generate public key h         │ ⟍ 304
└─────────────────────────────────────┘
                  │
                  ▼
┌─────────────────────────────────────┐
│     Generate message polynomial(s) m │ ⟍ 306
└─────────────────────────────────────┘
                  │
                  ▼
┌─────────────────────────────────────┐
│    Select random private polynomial r │ ⟍ 308
└─────────────────────────────────────┘
                  │
                  ▼
┌─────────────────────────────────────┐
│  Compute second intermediate private │ ⟍ 310
│            polynomial t              │
└─────────────────────────────────────┘
                  │
                  ▼
┌─────────────────────────────────────┐
│   Compute third intermediate private │ ⟍ 312
│            polynomial a              │
└─────────────────────────────────────┘
                  │
                  ▼
┌─────────────────────────────────────┐
│       Generate first digital signature │ ⟍ 314
│            polynomial u              │
└─────────────────────────────────────┘
                  │
                  ▼
┌─────────────────────────────────────┐
│    Generate second digital signature │ ⟍ 316
│            polynomial v              │
└─────────────────────────────────────┘
                  │
                  ▼
┌─────────────────────────────────────┐
│   Verify digital signature polynomials │ ⟍ 318
│        according to Condition B      │
└─────────────────────────────────────┘
```

*FIG. 3*

Select private key polynomials (*f*,*g*) of
Key Type A ⟍ 402

Generate one-time private key *e* ⟍ 404

Generate one-time public key polynomials
*h1* and *h2* ⟍ 406

Generate message polynomial(s) *m* ⟍ 408

Select first random private polynomial *r1* ⟍ 410

Compute first intermediate private
polynomial *t1* ⟍ 412

Compute second intermediate private
polynomial *a1* ⟍ 414

Generate first digital signature
polynomial *u1* ⟍ 416

Generate second digital signature
polynomial *v1* ⟍ 418

Select second random private polynomial *r2* ⟍ 420

Compute third intermediate private
polynomial *t2* ⟍ 422

Compute fourth intermediate private
polynomial *a2* ⟍ 424

Generate third digital signature
polynomial *u2* ⟍ 426

Generate fourth digital signature
polynomial *v2* ⟍ 428

Verify digital signature polynomials
according to modified Condition A ⟍ 430

*FIG. 4*

Select private key polynomials (*f,g*) of Key Type A ⟍ 502

Generate one-time private key *e* ⟍ 504

Generate one-time public key polynomials *h1 and h2* ⟍ 506

Generate message polynomial(s) *m* ⟍ 508

Select first random private polynomial *r1* ⟍ 510

Compute first intermediate private polynomial *t1* ⟍ 512

Select second intermediate private polynomial *a1* ⟍ 514

Generate first digital signature polynomial *u1* ⟍ 516

Generate second digital signature polynomial *v1* ⟍ 518

Select second random private polynomial *r2* ⟍ 520

Compute third intermediate private polynomial *t2* ⟍ 522

Select fourth intermediate private polynomial *a2* ⟍ 524

Generate third digital signature polynomial *u2* ⟍ 526

Generate fourth digital signature polynomial *v2* ⟍ 528

Verify digital signature polynomials according to modified Condition A ⟍ 530

*FIG. 5*

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 28884101 P

### Non-patent literature cited in the description

- NSS: The NTRU Signature Scheme. **J. HOFFSTEIN ; J. PIPHER ; J.H. SILVERMAN.** PROC. OF EUROCRYPT '01, LNCS. Springer-Verlag, 2001, vol. 2045, 211-228
- Cryptanalysis of the NTRU Signature Scheme (NSS) from Eurocrypt 2001. **C. GENTRY ; J. JONSSON ; J. STERN ; M. SZYDLO.** PROC, OF ASIACRYPT '01, LNCS. Springer-Verlag, 2001, vol. 2248, 1-20
- Cryptanalysis of the Revised NTRU Signature Scheme. **C. GENTRY ; M. SZYDLO.** ADVANCES IN CRYPTOLOGY-EUROCRYPT '02, LECTURE NOTES IN COMPUTER SCIENCE. Springer-Verlag, 2002